**Europäisches Patentamt**

**European Patent Office**

**Office européen des brevets**

(19)

(11) Veröffentlichungsnummer: **0 452 861 A1**

## (12) EUROPÄISCHE PATENTANMELDUNG

(21) Anmeldenummer: **91105992.1**

(22) Anmeldetag: **16.04.91**

(51) Int. Cl.5: **A61C 9/00, A61C 13/01**

(30) Priorität: **18.04.90 DE 4012383**

(43) Veröffentlichungstag der Anmeldung:
**23.10.91 Patentblatt 91/43**

(84) Benannte Vertragsstaaten:
**AT BE CH DE DK ES FR GB GR IT LI LU NL SE**

(71) Anmelder: **Schmitz, Berthold**
**Nettelbeckstrasse 1**
**W-5000 Köln 60(DE)**

(72) Erfinder: **Schmitz, Berthold**
**Nettelbeckstrasse 1**
**W-5000 Köln 60(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Verfahren zum Formen härtbaren Materials für Dentalzwecke und eine Vorrichtung zur Durchführung des Verfahrens.**

(57) Bei dem Verfahren wird zum Aufbau des Funktionsrandes (21) auf einem Dentallöffel (19) ein Materialstrang mit im wesentlichen nierenförmigem oder halbtropfenförmigem Querschnitt aus der Auslaßöffnung eines Aufnahmerohrs (31) ausgepreßt und auf den Funktionsrand (21) des Dentallöffels (19) aufgebracht. Der Funktionsrand (21) wird vor dem Aushärten des Materials durch Abdruck der Anatomie des Kiefers angepaßt. Die Vorrichtung zur Durchführung des Verfahrens besteht aus einem Aufnahmerohr (31) mit einer im wesentlichen nierenförmigen oder halbtropfenförmigen Querschnittsfläche sowie einem in dem Aufnahmerohr (31) verschiebbaren Kolben (41) mit einer Kolbenstange (45). Das die Auslaßöffnung (37) bildende Ende des Aufnahmerohrs (31) ist offen und weist ebenfalls einen nierenförmigen oder halbtropfenförmigen Querschnitt auf. Das stangenförmige thermoplastische Material zum Aufbau des Funktionsrandes wird in das Aufnahmerohr eingeschoben und in dem Aufnahmerohr in einem heißen Wasserbad erhitzt. Zum Aufbringen des thermoplastischen Materials wird die Vorrichtung mit dem Aufnahmerohr an dem Löffelrand (21) entlanggezogen und das Material, das von zähflüssiger Konsistenz ist, auf den Rand des Löffels aufgetragen. Die Vorrichtung erlaubt, einen Materialstrang (27) gleichmäßiger Dicke auf den Löffelrand aufzutragen.

FIG.10

EP 0 452 861 A1

Die Erfindung betrifft ein Verfahren zum Formen härtbaren Materials für Dentalzwecke nach dem Oberbegriff des Patentanspruchs 1.

Eine totale Oberkieferprothese besteht aus einer in den Mund des Patienten einsetzbaren Prothesenbasis, die die einzelnen künstlichen Zähne trägt. Die Prothesenbasis wird an der Mundschleimhaut des Oberkiefers durch Unterdruck gehalten. Die Aufrechterhaltung des Unterdrucks ist aber nur dann gewährleistet, wenn die Prothesenbasis exakt der Anatomie des Oberkiefers angepaßt ist.

Zur Herstellung der Prothesenbasis muß ein möglichst formgerechter Abdruck des Oberkiefers vorliegen, der die Negativform des zukünftigen Prothesenlagers darstellt. Als Zweitabdruck des Oberkiefers wird ein individueller Dentallöffel angefertigt. Der Löffel gibt die Anatomie des Oberkiefers aber nicht exakt wieder und kann daher nicht als Modell zur Herstellung der Prothesenbasis benutzt werden. Da die vestibuläre Schleimhaut bei der Erstabformung häufig von der knöchernen Unterlage abgespannt wird, ist der individuelle Löffel im Randbereich zu weit. Eine nach einem solchen Abdruck angefertigte Prothesenbasis würde an der Mundschleimhaut des Patienten nicht durch Unterdruck gehalten werden, da die beweglichen Schleimhautanteile im Randbereich des Kiefers nur unzureichend abgeformt sind und der Funktionsrand der zukünftigen Prothese nicht den genauen Verhältnissen des Kiefers entsprechen würde. Der Funktionsrand ist aber beim zahnlosen Oberkiefer für den Unterdruck einer Totalprothese von entscheidender Bedeutung. Eine exakte Abdichtung der Prothesenbasis ist nur dann zu erreichen, wenn die Randbereiche des Funktionslöffels derart nachbearbeitet werden, daß sie der genauen Anatomie des Oberkiefers entsprechen.

Zur Nachbearbeitung des Funktionsrandes ist es bekannt, auf den Funktionsrand des Löffels eine thermoplastische Kompensationsmasse aufzutragen. Das in runden Stangen erhältliche thermoplastische Material wird über einer Flamme erhitzt und auf den Löffelrand aufgeträufelt. Nach dem Aufbringen der thermperierten Masse wird der individuelle Löffel nochmals in den Mund des Patienten eingesetzt und die Schleimhautanteile im Kieferrandbereich in der noch nicht erhärteten Masse abgeformt, so daß sich der Funktionsrand des Löffels den Verhältnissen im Randbereich des Kiefers exakt anpaßt. Nachteilig ist, daß beim Aufträufeln der thermoplastischen Masse die geforderte Profilstärke des aufzutragenden Materialstranges nicht exakt eingehalten werden kann. Bei einer zu geringen Profilstärke wird der Kieferrandbereich unzureichend nachgebildet, so daß die spätere Prothesenbasis nicht durch Unterdruck gehalten wird. Zuviel aufgetragene Masse führt andererseits dazu, daß die Prothesenbasis Druckstellen an den Rändern des Kiefers verursacht. Infolge der starken Druckbelastung erhärten die elastischen kollagenen Bänder der Schleimhaut im Kieferrandbereich, wodurch wiederum der die Prothese haltende Unterdruck verlorengeht. Des weiteren entstehen durch das freihändige Auftragen der Masse zerklüftete, zum Teil schmierige Oberflächen, die mit der Flamme noch nachbearbeitet werden müssen.

Eine bekannte Vorrichtung zur Einbringung aushärtbarer Abdruckmasse in den Mund des Patienten (DE-GM 77 27 030) besteht aus einem zylindrischen Gehäuseteil, das sich über einen Verlängerungsbereich in eine kegelstumpfförmige Tülle fortsetzt. Die in das Spritzengehäuse eingebrachte Formmasse wird mit einem Kolben aus der Auslaßöffnung der Tülle herausgepreßt. Die Auslaßöffnung weist einen kreisförmigen Querschnitt auf. Die bekannte Spritze ist lediglich dazu geeignet, eine vorbestimmte Menge von Formmasse in dem Mund des Patienten zu verteilen.

Ferner ist eine Vorrichtung zur genauen Bemessung der für die Herstellung einer Abdruckmasse zu mischenden Komponenten (US 3 351 244) bekannt, die eine zylindrische Hülse mit einer Kolbenstange aufweist. In die Hülse wird eine vorbestimmte Menge der zu mischenden Komponente eingebracht. Der Materialstrang kann dann mit der Kolbenstange aus der zylindrischen Hülse herausgepreßt werden. Mit der bekannten Vorrichtung läßt sich eine vorgegebene Materialmenge genau bemessen. Zur Herstellung der Abdruckmasse wird der Materialstrang auf eine Unterlage gespritzt und mit einem anderen Material zu der Abdruckmasse vermischt. Es stellt sich nicht das Problem, einen Materialstrang zu formen, mit dem ein Funktionsrand aufgebaut werden kann, der der Anatomie des Kiefers exakt anzupassen ist.

Der Erfindung liegt die Aufgabe zugrunde, ein Verfahren zum Formen härtbaren Materials für Dentalzwecke zu schaffen, das den Aufbau eines an die Anatomie des Kiefers exakt anzupassenden Funktionsrandes auf einem Dentallöffel erlaubt.

Die Lösung dieser Aufgabe erfolgt erfindungsgemäß mit den im Patentanspruch 1 angegebenen Merkmalen.

Bei dem erfindungsgemäßen Verfahren wird zum Aufbau des Funktionsrandes aus der Auslaßöffnung des Aufnahmerohrs ein Materialstrang ausgepreßt und auf dem Funktionsrand aufgebracht. Vor dem Aushärten des Materials wird der Funktionsrand dann durch Abdruck der Anatomie des Kiefers angepaßt.

Die Vorrichtung ermöglicht, die aufgetragene Materialmenge nach der Länge des Funktionsrandes exakt zu bemessen, indem nur so viel Material in das Aufnahmerohr eingefüllt wird, wie zum Aufbringen eines Materialstranges in der geforderten Stärke erforderlich ist. Das Material braucht lediglich längs des Löffelrandes gleichmäßig verteilt zu werden, um einen Funktionsrand mit einer vorgegebenen Stärke zu erhalten.

Vorteilhafterweise wird ein Materialstrang mit im wesentlichen nierenförmigem oder halbtropfenförmigem Querschnitt erzeugt. Die vorgegebene Form des zähflüssigen, aus der Auslaßöffnung herausgedrückten Materialstrangs ermöglicht den Aufbau eines gleichmäßig geformten Funktionsrandes. Für den Aufbau des vorderen Löffelrandes wird ein Materialstrang mit im wesentlichen nierenförmigem Querschnitt auf den Funktionsrand des Dentallöffels aufgetragen. Der aus der Auslaßöffnung austretende nierenförmige Materialstrang kann auf den U-förmigen vorderen Löffelrand so aufgebracht werden, daß er mit dem nach innen gewölbten Bereich auf dem Rand des Funktionslöffels aufliegt und zu beiden Seiten hin gleichmäßig zerfließt. Für den Aufbau der hinteren querverlaufenden Randabdichtung des Dentallöffels wird ein Materialstrang mit im wesentlichen halbtropfenförmigem Querschnitt aus dem Aufnahmerohr gepreßt.

Bei der Vorrichtung zur Durchführung des Verfahrens ist ein Aufnahmerohr mit einer Auslaßöffnung vorgesehen, die einen im wesentlichen nierenförmigen oder halbtropfenförmigen Querschnitt aufweist.

Das in dem Aufnahmerohr befindliche Material kann durch Verschieben eines in dem Aufnahmerohr vorgesehenen Kolbens aus dem offenen, die Auslaßöffnung des Aufnahmerohrs bildenden Ende herausgedrückt werden. Bei einer konstanten Vorschubgeschwindigkeit des Kolbens tritt aus der Auslaßöffnung ein gleichmäßig geformter nierenförmiger oder halbtropfenförmiger Materialstrang heraus, der auf den Rand des Dentallöffels aufgelegt wird. Da der Materialstrang eine glatte Oberfläche aufweist, ist eine Nachbearbeitung des Funktionsrandes mit der Flamme nicht erforderlich. Der Vorschub des Materials kann aber auch beispielsweise von Hand erfolgen.

Die Auslaßöffnung erstreckt sich vorteilhafterweise mindestens über die Hälfte der Querschnittsfläche des Aufnahmerohrs, so daß der aus dem Aufnahmerohr austretende Materialstrang nicht allzu stark eingeschnürt wird und unter Beibehaltung der durch die Querschnittsfläche der Auslaßöffnung vorgegebenen Form leicht aus dem Aufnahmerohr herausgedrückt werden kann.

Zweckmäßigerweise haben das Aufnahmerohr und die Auslaßöffnung die gleiche im wesentlichen nierenförmige oder halbtropfenförmige Querschnittsfläche, wobei das härtbare Material vorzugsweise ein thermoplastisches, in Stangen geformtes Material mit ebenfalls im wesentlichen nierenförmiger oder halbtropfenförmiger Querschnittsfläche ist. Die thermoplastische Materialstange wird in das Aufnahmerohr eingeschoben und in dem Aufnahmerohr solange in einem Wasserbad erhitzt, bis das Material von zähflüssiger Konsistenz ist. Da das Material erst im Aufnahmerohr erhitzt wird, erlaubt die Vorrichtung zum Aufbau des Funktionsrandes eine sehr saubere Arbeitsweise.

Die Auslaßöffnung des Aufnahmerohrs weist vorteilhafterweise einen Abstandshalter auf, der ein in Längsrichtung zum Aufnahmerohr verlaufender Führungsstift sein kann. Der Abstandshalter wird auf die Seitenflanke des Löffelrandes aufgelegt, so daß die Auslaßöffnung des Aufnahmerohrs beim Auftragen der Masse einen definierten Abstand zum Rand des Löffels hat. Die sich mit dem Führungsstift an der Flanke des Funktionsrandes abstützende Vorrichtung kann unter Beibehaltung eines optimalen Abstandes an dem Löffelrand entlanggezogen werden, wobei sich das herausgedrückte Material gleichmäßig verteilt.

Im folgenden wird unter Bezugnahme auf die Zeichnungen ein Ausführungsbeispiel der Erfindung näher erläutert.

Es zeigen:

| | |
|---|---|
| Fig. 1 | eine totale Oberkieferprothese in perspektivischer Darstellung und den Querschnitt des Oberkiefers, |
| Fig. 2 | die durch Unterdruck an der Schleimhaut des Oberkiefers haftende Totalprothese von Fig. 1, |
| Fig. 3 | einen Funktionslöffel mit einem nachbearbeiteten Funktionsrand, |
| Fig. 4 | die Vorrichtung zum Aufbau des Funktionsrandes in perspektivischer Darstellung, |
| Fig. 5 | das abgenommene Griffstück der Vorrichtung von Fig. 4, |
| Fig. 6 | eine nierenförmige Querschnittsfläche des Aufnahmerohrs, |
| Fig. 7 | eine halbtropfenförmige Querschnittsfläche des Aufnahmerohrs, |
| Fig. 8 | das thermoplastische Material in Stangenform, |
| Fig. 9 | das Erhitzen des thermoplastischen Materials in einem heißen Wasserbad, |
| Fig. 10 | der Aufbau des Funktionsrandes mit der Vorrichtung nach Fig. 4, |
| Fig. 11 | einen Schnitt entlang der Linie XI-XI von Fig. 10 und |
| Fig. 12 | einen Schnitt entlang der Linie XII-XII von Fig. 10. |

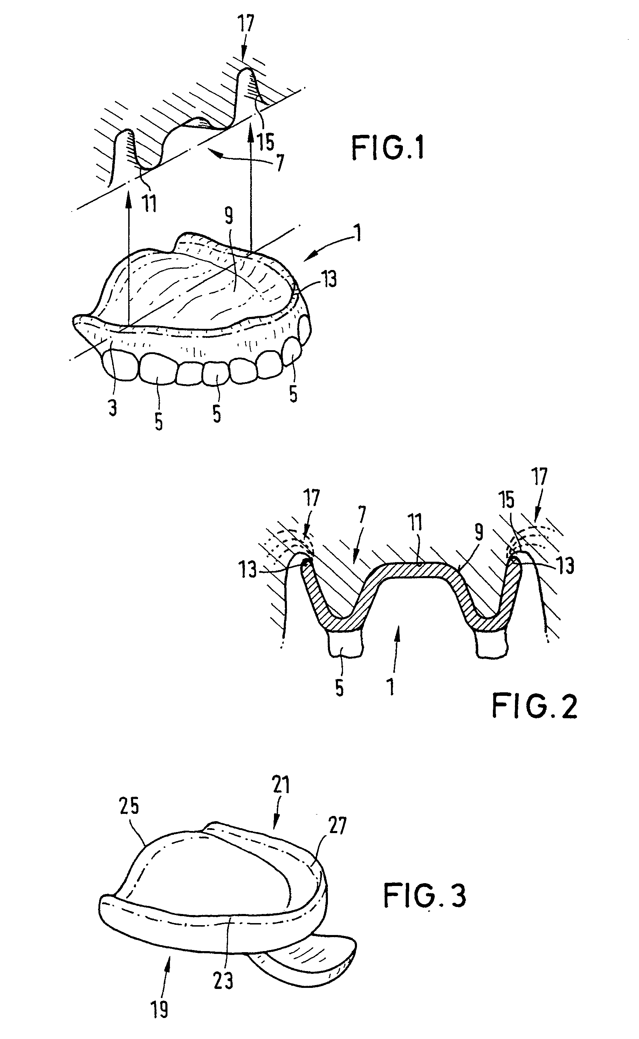

Fig. 1 zeigt eine totale Oberkieferprothese 1 in perspektivischer Darstellung. Die Totalprothese 1 besteht aus einer aus Kunststoff geformten Prothesenbasis 3, in der die künstlichen Zähne 5 eingearbeitet sind. Die Prothesenbasis 3 weist eine zerklüftete, der Anatomie des Oberkiefers 7 exakt angepaßte Innenfläche 9 auf und wird an der Mundschleimhaut 11 des Oberkiefers 7 durch Unterdruck gehalten (Fig. 2). Der Unterdruck kann aber nur dann aufrechterhalten werden, wenn die Prothese an ihrem Funktionsrand 13 gegenüber den beweglichen Schleimhautanteilen 15 im Bereich des Kieferrandes 17 vollständig abgedichtet ist. Da beim zahnlosen Kiefer der Funktionsrand 13 für den Unterdruck unter der Totalprothese von großer Bedeutung ist, wird der Funktionsrand 13 auch als Ventilrand bezeichnet.

Zur Herstellung der Oberkieferprothese 1 wird ein Modell des Oberkiefers 7 benötigt, das insbesondere die Verhältnisse im Kieferrandbereich 17 genau wiedergibt. Fig. 3 zeigt den Dentallöffel 19, der zur Anfertigung des Modells verwendet wird. Da dieser Funktionslöffel als Erstabdruck des Kiefers die Verhältnisse im Kieferrandbereich nur unzureichend wiedergibt, muß der Rand 21 des Löffels nachbearbeitet werden. Zum Aufbau des vorderen, U-förmig gebogenen Funktionsrandes 23 und des hinteren querverlaufenden Funktionsrandes 25 wird auf den Löffelrand ein Strang von thermoplastischem Material 27 aufgebracht. Anschließend wird der Funktionslöffel 19 in den Mund des Patienten eingesetzt und die Schleimhautanteile im Kieferrandbereich in dem noch nicht erhärteten Material abgeformt.

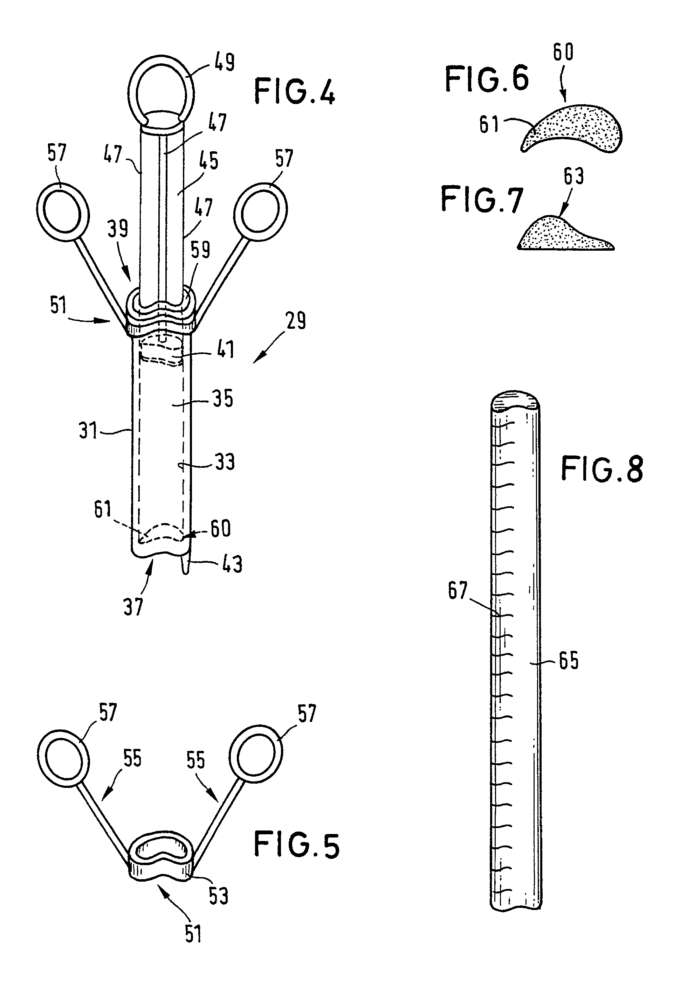

Fig. 4 zeigt eine Vorrichtung 29 zum Aufbau des Funktionsrandes aus härtbarem Material auf dem Dentallöffel 19 in perspektivischer Darstellung. Die Vorrichtung weist ein rohrförmiges, aus Metall, Glas oder Kunststoff gefertigtes Aufnahmerohr 31 mit einem nierenförmigen Querschnitt auf. Die Innenwand 33 des Aufnahmerohrs sollte möglichst glatt sein, damit das in dem Kolbengang des Aufnahmerohrs einsetzbare Material zum Aufbau des Funktionsrandes nicht an dem Aufnahmerohr 31 haften kann. Das Aufnahmerohr 31 ist an beiden Enden offen, wobei das eine Ende eine Auslaßöffnung 37 für das Material und das andere Ende eine Aufnahmeöffnung 39 für einen in das Aufnahmerohr 31 einschiebbaren Kolben 41 bildet. Beide Öffnungen 37,39 haben die gleiche nierenförmige Querschnittsfläche 60 wie der Kolbengang 35 des Aufnahmerohrs 31.

An einem Nierenende 61 der Auslaßöffnung 37 ist ein in Längsrichtung zum Aufnahmerohr verlaufender Führungsstift 43 angebracht, der einstückiger Bestandteil des Aufnahmerohrs 31 ist. Der Führungsstift 43 wird auf den Funktionsrand des Löffels aufgelegt und hat die Funktion eines Abstandshalters.

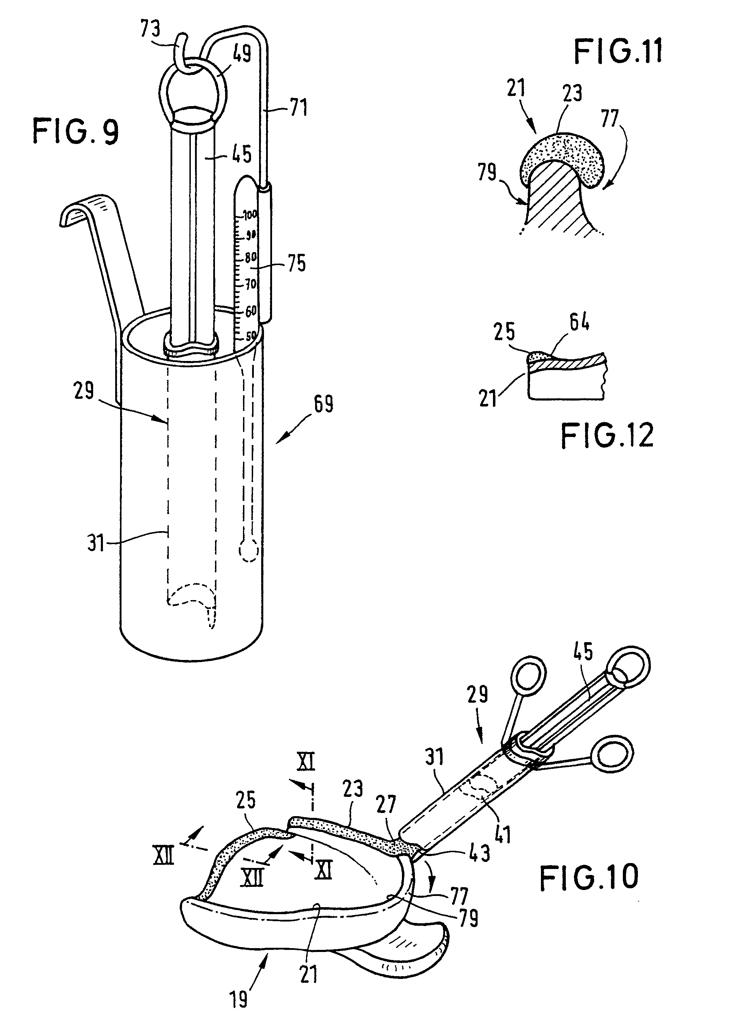

Der in dem Aufnahmerohr verschiebbare Kolben 41 ist ein gegenüber der Innenwand 33 des Aufnahmerohrs abgedichteter, ebenfalls nierenförmiger Kunststoffstopfen, der an dem einen Ende einer Kolbenstange 45 befestigt ist, die sich mit drei längslaufenden Stegen 47 an der Innenwandung 33 des Aufnahmerohrs 31 abstützt. An dem anderen, aus dem Aufnahmerohr herausragenden Ende der Kolbenstange 45 ist ein Ring 49 angebracht. An dem Ring kann die Vorrichtung 29 zum Schmelzen des in dem Aufnahmerohr befindlichen thermoplastischen Materials in einem heißen Wasserbad aufgehängt werden, wie unter Bezugnahme auf Fig. 9 im einzelnen noch beschrieben wird.

Auf das Aufnahmerohr 31 ist ein Griffstück 51 aufgeschoben, an dem die Vorrichtung mit Zeige- und Mittelfinger gehalten wird. Fig. 5 zeigt das abnehmbare Griffstück 51, das aus einer nierenförmigen Metallmanschette 53 mit zwei seitlich nach hinten abstehenden Flügeln 55 besteht, an deren Enden je ein Ring 57 für den Zeige- bzw. den Mittelfinger angebracht ist. Das Ringstück 53 wird von vorne auf das Aufnahmerohr 31 aufgeschoben und stützt sich an einem umgebördelten Rand 59 an dem hinteren Ende des Aufnahmerohrs 31 ab.

Die nierenförmige Querschnittsfläche der Auslaßöffnung 37 ist in Fig. 6 dargestellt. Die Querschnittsfläche ist nicht exakt symmetrisch, sondern an einem der beiden Nierenenden 61 abgeflacht. Die nierenförmige Auslaßöffnung 60 erweitert sich kontinuierlich und endet in einer wulstartigen Verdickung. Der Abstand zwischen Ober- und Unterseite der Auslaßöffnung nimmt zunächst stetig zu und verringert sich dann wieder zum anderen Ende der Auslaßöffnung hin. Dabei liegt der maximale Abstand zwischen Ober- und Unterseite in der Hälfte, die dem sich verjüngenden Ende abgewandt ist. Die Oberseite der nierenförmigen Auslaßöffnung 60 ist konvex und ihre Unterseite ist konkav ausgebildet. Das Aufnahmerohr 31, dessen Auslaßöffnung 37 nierenförmigen Querschnitt aufweist, findet zum Aufbau des U-förmigen vorderen Funktionsrandes 23 (Fig. 3) Verwendung. Der querverlaufende hintere Funktionsrand 25 wird mit einer Vorrichtung hergestellt, deren Auslaßöffnung 37 die in Fig. 7 gezeigte halbtropfenförmige Querschnittsfläche 63 aufweist. Die halbtropfenförmige Auslaßöffnung 63 läuft an ihrem einen Ende spitz aus und erweitert sich kontinuierlich zu ihrem anderen Ende hin. Der maximale Abstand zwischen ihrer Ober- und Unterseite liegt in der dem spitzen Ende abgewandten Hälfte. Die Oberseite der Auslaßöffnung 63 ist im wesentlichen konvex und ihre Unterseite ist eben.

Im folgenden werden die einzelnen Arbeitsgänge zum Aufbau des Funktionsrandes und die Funktionsweise der Vorrichtung beschrieben.

Fig. 8 zeigt das thermoplastische Material, mit dem der Funktionsrand aufgebaut wird. Prinzipiell kann anstelle des zu erhitzenden thermoplastischen Materials in das Aufnahmerohr 31 aber auch eine zähflüssige Masse eingefüllt werden, die später aushärtet. Das thermoplastische Material hat die Form einer Stange 65 mit einem dem Kolbengang des Aufnahmerohrs angepaßten nierenförmigen Querschnitt. Als thermoplastisches Material findet eine Kerrmasse Verwendung. Die Querschnittsfläche der Kerrstange 65 ist so bemessen, daß die Stange in dem Aufnahmerohr 31 festsitzt und nicht durch die Auslaßöffnung 37 nach unten herausrutschen kann. Zur Nachbearbeitung des Funktionsrandes 21 wird zunächst die Länge des Funktionsrandes 21 bestimmt. Diese kann mit einem geeigneten Entfernungsmesser festgestellt werden, mit dem der Löffelrand 21 abgefahren wird. Aus der Länge des Funktionsrandes wird die benötigte Materialmenge und damit die Länge der in das Aufnahmerohr 31 einzusetzenden Kerrstange 65 berechnet. Die Kerrstange wird auf die vorgegebene Länge unter Zuhilfenahme der seitlich auf der Kerrstange aufgedruckten Millimeterskala 67 gekürzt und in das Aufnahmerohr eingeschoben. Zwischen dem Kolben 41 und der Kerrstange 65 kann noch eine Kunststoffolie eingelegt werden, um ein Festkleben der Kerrstange an dem Kolben zu vermeiden. Zum Schmelzen des thermoplastischen Materials wird die Vorrichtung in einem heißen Wasserbad von ca. 80° erhitzt. Vor dem Erhitzen wird das Griffstück 51 von dem Aufnahmerohr 31 abgezogen, so daß nicht die Gefahr besteht, sich später an dem heißen Griffstück zu verbrennen.

Fig. 9 zeigt einen schmalen Behälter 69 zur Aufnahme der Vorrichtung 29. Der Behälter weist eine Halterung 71 mit einem Haken 73 auf, an dem der Ring 49 des Kolbens 45 eingehängt wird. An der Innenwandung des Behälters 69 befindet sich ein Thermometer 75 zur Kontrolle der Wassertemperatur.

In Fig. 10 ist der Aufbau des Funktionsrandes 21 dargestellt. Das geschmolzene thermoplastische Material ist von zähflüssiger Konsistenz und wird aus dem Aufnahmerohr 31 durch Hereinschieben des Kolbens 45 herausgepreßt. Dabei wird der Führungsstift 43 auf die äußere Seitenflanke 77 des Funktionsrandes 21 aufgelegt und die Vorrichtung an dem Löffelrand mit konstanter Geschwindigkeit entlanggezogen, so daß sich der aus dem Aufnahmerohr 31 heraustretende Materialstrang 27 in gleichmäßiger Dicke mit seiner konkaven Unterseite sattelartig auf den Löffelrand auflegt. Da die dem Führungsstift 43 abgewandte innere Nierenseite 61 abgeflacht ist, läuft der aufgebrachte Materialstrang 23 zur inneren Flanke 79 des Löffels hin flach aus, während er zur Außenflanke 77 hin breiter ausgebildet ist (Fig. 11).

Nach dem Aufbringen der Masse wird der Löffel 19 in etwa 37° warmes Wasser getaucht, um die Masse an ihrer Oberfläche abzukühlen. Dann wird der Löffel 19 in den Mund des Patienten eingesetzt und die Schleimhautanteile im Kieferrandbereich in der noch nicht erhärteten Masse abgeformt. Der den Verhältnissen im Randbereich des Kiefers exakt angepaßte Dentallöffel kann nun als Modell zur Herstellung der Prothesenbasis verwendet werden. Die Arbeiten zum Aufbau des Funktionsrandes können von Helferinnen bzw. Zahntechnikern übernommen werden.

Zum Aufbau des querverlaufenden hinteren Funktionsrandes 25 wird eine Vorrichtung verwendet, deren Auslaßöffnung 37 den in Fig. 7 dargestellten halbtropfenförmigen Querschnitt hat. Die Querschnittsfläche 63 der Auslaßöffnung 37 weist die Form einer längs ihrer Symmetrieebene geschnittenen Birne auf. Fig. 12 zeigt den Querschnitt des querverlaufenden Funktionsrandes 25. Beim Aufbau der hinteren Randabdichtung wird das Aufnahmerohr so ausgerichtet, daß die Spitze 64 des halbtropfenförmigen Stranges nach innen weist und sich der Strang mit seiner ebenen Unterseite auf den Dentallöffel auflegt.

## Patentansprüche

1. Verfahren zum Formen härtbaren Materials für Dentalzwecke, bei dem das Material (65) durch die Auslaßöffnung (37) eines Aufnahmerohres (31) ausgepreßt wird,
**dadurch gekennzeichnet,**
daß zum Aufbau des Funktionsrandes (21) auf einem Dentallöffel (19) ein Materialstrang ausgepreßt und auf den Funktionsrand (21) des Dentallöffels (19) aufgebracht wird, und daß der Funktionsrand (21) vor dem Aushärten des Materials (65) durch Abdruck der Anatomie des Kiefers angepaßt wird.

2. Verfahren nach Anspruch 1, dadurch gekennzeichnet, daß ein Materialstrang mit im wesentlichen nierenförmigem oder im wesentlichen halbtropfenförmigem Querschnitt erzeugt wird.

3. Verfahren nach Anspruch 1 oder 2, dadurch gekennzeichnet, daß das Material (65) in Form eines festen Materialstabes mit im wesentlichen nierenförmigem oder im wesentlichen halbtropfenförmigem Querschnitt verwendet wird.

4. Vorrichtung zur Durchführung des Verfahren nach einem der Ansprüche 1 bis 3, gekennzeichnet durch ein Aufnahmerohr (31) für das Material (65) mit einer im wesentlichen nierenförmigen oder im wesentlichen halbtropfenförmigen Auslaßöffnung (37).

5. Vorrichtung nach Anspruch 4, dadurch gekennzeichnet, daß ein in dem Aufnahmerohr (31) verschiebbarer Kolben (41) mit einer Kolbenstange (45) vorgesehen ist.

6. Vorrichtung nach Anspruch 4 oder 5, dadurch gekennzeichnet, daß die nierenförmige Querschnittsfläche der Auslaßöffnung (37) an einem Nierenende abgeflacht ist.

7. Vorrichtung nach einem der Ansprüche 4 bis 6, dadurch gekennzeichnet, daß das Aufnahmerohr (31) einen im wesentlichen nierenförmigen oder im wesentlichen halbtropfenförmigen Querschnitt aufweist.

8. Vorrichtung nach einem der Ansprüche 5 bis 7, dadurch gekennzeichnet, daß die Auslaßöffnung (37) und der Kolbengang (35) des Aufnahmerohrs (31) die gleiche Querschnittsfläche (60,63) haben.

9. Vorrichtung nach einem der Ansprüche 4 bis 8, dadurch gekennzeichnet, daß das Aufnahmerohr (31) an der Auslaßöffnung (37) einen Abstandshalter aufweist.

10. Vorrichtung nach Anspruch 9, dadurch gekennzeichnet, daß der Abstandshalter ein in Längsrichtung zum Aufnahmerohr (31) verlaufender Führungsstift (43) ist.

11. Vorrichtung nach Anspruch 10, dadurch gekennzeichnet, daß der Führungsstift (43) im Bereich des einen Nierenendes (61) angebracht ist.

12. Vorrichtung nach einem der Ansprüche 4 bis 11, dadurch gekennzeichnet, daß ein auf das Aufnahmerohr (31) aufschiebbares Griffstück (51) vorgesehen ist.

13. Vorrichtung nach einem der Ansprüche 4 bis 12, dadurch gekennzeichnet, daß das härtbare Material (65) die Form einer Stange mit im wesentlichen nierenförmigen oder halbtropfenförmigen Querschnitt aufweist.

FIG.1

FIG.2

FIG.3

FIG.4

FIG.6

FIG.7

FIG.8

FIG.5

FIG.9

FIG.11

FIG.12

FIG.10

Europäisches Patentamt

**EUROPÄISCHER RECHERCHENBERICHT**

Nummer der Anmeldung

EP 91105992.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| Y | <u>DE - A1 - 3 346 254</u><br>(KYOCERA)<br>* Anspruch 1; Fig. 1 *<br>-- | 1-5 | A 61 C  9/00<br>A 61 C 13/01 |
| Y | <u>DE - A1 - 3 827 963</u><br>(TOSHI)<br>* Anspruch; Fig. 2 *<br>-- | 1-5 | |
| D,A | <u>DE - U - 7 727 030</u><br>(RÖPER)<br>* Gesamt *<br>-- | 1 | |
| A | <u>FR - A1 - 2 473 908</u><br>(REYNAUI)<br>* Anspruch 1; Fig. 1 *<br>---- | 1 | |

RECHERCHIERTE SACHGEBIETE (Int. Cl.⁵)

A 61 C

Der vorliegende Recherchenbericht wurde für alle Patentansprüche erstellt.

| Recherchenort | Abschlußdatum der Recherche | Prüfer |
|---|---|---|
| WIEN | 05-07-1991 | MARCHART |